# EUROPEAN PATENT APPLICATION

(11) **EP 3 835 440 A1**
(43) Date of publication of application: **16.06.2021**
(21) Application number: 20209054.4
(22) Date of filing: 20.11.2020
(51) Int. Cl.: C22C 9/01, C22C 9/06, C22F 1/08, G04B 37/22, G04D 3/00

(54) **ARTICLE SUPERIOR IN DESIGN AND METHOD FOR PRODUCING THE SAME**

(30) Priority: 11.12.2019 JP 2019223970; 21.08.2020 JP 2020140476
(71) Applicant: NGK Insulators, Ltd., Nagoya-shi, Aichi 467-8530 (JP)
(72) Inventor: OTA, Satoshi, Nagoya-shi, Aichi 467-8530 (JP)
(74) Representative: Mewburn Ellis LLP

(57) **Abstract**

An article that is made of a hard metal, yet is superior in design on the surface, particularly a metal article that allows aging impression of the color tone to be enjoyed is produced or provided. Such an article is provided by a method for producing an article superior in design, including molding and/or processing a copper alloy into a designed article, and subjecting a surface of the article to an etching treatment to allow a crystalline structure of the copper alloy to become visibly recognizable.

## Description

### TECHNICAL FIELD

The present invention relates to an article with superior in design and a method for producing the article.

### BACKGROUND ART

Wristwatch cases have conventionally been provided with a hard coating as an outer layer to prevent wear and scratches on a soft stainless steel base material that is easily machined. The hard coating, however, has the problem of being peeled or cracked. To solve this problem, a method for producing a wristwatch case has been proposed in which a beryllium-copper alloy is hardened by a heat treatment, and then a layer of a stainless steel metal material is produced on an outer side (see, for example, Patent Literature 1 (CH543764A)).

Meanwhile, there is a recent trend among quality-wristwatch enthusiasts to enjoy aging (change over time) of the color tone. In response to this, various quality-wristwatch manufacturers have recently released models that use bronze for wristwatch cases.

### CITATION LIST

### PATENT LITERATURE

[Patent Literature 1] CH543764A

### SUMMARY OF INVENTION

However, the provision of a coating on a base material metal as disclosed in Patent Literature 1 has a drawback in that because the surface of the base material metal is hidden by the coating, the user cannot enjoy the aging (change over time) of the color tone of the base material metal as in the recent trend. In other words, such a conventional metal article has the problem of being inferior in product design, in light of the recent trend described above. Moreover, bronze is so soft that it easily deforms upon dropping or hitting.

The inventor of the present invention has now found that it is possible to produce or provide an article that is made of a hard metal, yet is superior in design on the surface, particularly a metal article that allows aging (change over time) of the color tone to be enjoyed, by molding and/or processing a copper alloy into a designed article, and subjecting a surface of the article to an etching treatment to allow a crystalline structure of the copper alloy to become visibly recognizable.

It is an object of the present invention to produce or provide an article that is made of a hard metal, yet is superior in design on the surface, particularly a metal article that allows aging (change over time) of the color tone to be enjoyed.

The present invention provides the following aspects:
[Aspect 1]
   A method for producing an article superior in design, comprising molding and/or processing a copper alloy into a designed article, and subjecting a surface of the article to an etching treatment to allow a crystalline structure of the copper alloy to become visibly recognizable.
[Aspect 2]
   The method according to Aspect 1, wherein the designed article is selected from the group consisting of a case and a dial of a wristwatch, a cap and a barrel of a fountain pen, an eyeglass frame, and dishware.
[Aspect 3]
   The method according to Aspect 1 or 2, further comprising subjecting the article in which the crystalline structure has become visibly recognizable to a heat treatment in an air atmosphere to provide the surface of the article with an aging impression.
[Aspect 4]
   The method according to any one of Aspects 1 to 3, wherein the copper alloy is a precipitation-strengthening copper alloy or an age-hardenable copper alloy.
[Aspect 5]
   The method according to Aspect 4, wherein the precipitation-strengthening copper alloy or the age-hardenable copper alloy is at least one selected from the group consisting of a CuBe alloy, a CuNiSn alloy, a CuTi alloy, and a CuNiSi alloy.
[Aspect 6]
   The method according to any one of Aspects 1 to 5, wherein the molding and/or processing is performed using a technique not involving plastic deformation.
[Aspect 7]
   The method according to any one of Aspects 1 to 6, wherein the etching treatment is performed using an oxidizing agent.
[Aspect 8]
   The method according to any one of Aspects 1 to 7, wherein the copper alloy to be subjected to the etching treatment has undergone a homogenization treatment and/or a solution treatment, and a subsequent aging treatment.
[Aspect 9]
   An article superior in design, which is composed of a copper alloy and in which a crystalline structure of the copper alloy has become visibly recognizable.
[Aspect 10]
   The article superior in design according to Aspect 9, wherein the article is selected from the group consisting of a case and a dial of a wristwatch, a cap and a barrel of a fountain pen, an eyeglass frame, and dishware.
[Aspect 11]
   The article superior in design according to Aspect 9 or 10, wherein the article is produced using the method according to any one of Aspects 1 to 8.

### BRIEF DESCRIPTION OF DRAWINGS

Figure 1 is a photograph of a wristwatch case 10 (Example 1) made of a CuBe alloy after finish processing and a wristwatch case 12 (Example 2) made of a CuNiSn alloy after finish processing.
Figure 2 is a photograph of the surface of a CuBe alloy 20 after an etching treatment and the surface of a CuBe alloy 30 after heating the CuBe alloy 20 at 150°C for 2 hours in air.
Figure 3 is a photograph of the surface of a CuBe alloy 40 after heating the CuBe alloy 20 shown in Figure 2 at 200°C for 4 hours in air.

### DESCRIPTION OF EMBODIMENTS

### Article Superior in Design

A designed article of the present invention is an article that is composed of a copper alloy and in which a crystalline structure of the copper alloy has become visibly recognizable. Allowing the crystalline structure of the copper alloy to become visibly recognizable in this way, it is possible to provide an article that is made of a hard metal, yet is superior in design on the surface, particularly a metal article that allows aging (change over time) of the color tone to be enjoyed. As described above, while conventional wristwatch cases have been provided with a coating on a base material metal (such as stainless steel), they have a drawback in that because the surface of the base material metal is hidden by the coating, the user cannot enjoy the aging (change over time) of the color tone of the base material metal as in the recent trend. In other words, such a conventional metal article has the problem of being inferior in product design, in light of the recent trend described above. The present invention advantageously overcomes this problem.

Therefore, the designed article of the present invention is preferably a hard metal article that can appeal to a consumer or user not only a metallic appearance derived from the copper alloy but also an antique impression due to aging (change over time). Examples of such articles include a case and a dial of a wristwatch, a cap and a barrel of a fountain pen, an eyeglass frame, and dishware (such as a cup and a glass).

The copper alloy constituting the designed article is preferably a hard copper alloy. Therefore, a copper alloy that is too soft like bronze is undesirable because it easily deforms upon dropping or hitting. In particular, a precipitation-strengthening copper alloy or an age-hardenable copper alloy is preferred from the viewpoint of strength. Specifically, because a precipitation-strengthening copper alloy and an age-hardenable copper alloy exhibit strengths higher than that of a solid solution-strengthened copper alloy or a work-hardened copper alloy (this tendency is more remarkable when the copper alloys have undergone a method not involving plastic deformation, such as a casting method), they can be preferably applied to articles in which high strength is required. The high strengths of the copper alloys can effectively prevent deformation or breakage of the designed article upon dropping or hitting. Preferred examples of the precipitation-strengthening copper alloy or the age-hardenable copper alloy include a CuBe alloy, a CuNiSn alloy, a CuTi alloy, a CuNiSi alloy, and any combinations thereof.

Typical compositions of the CuBe alloy, CuNiSn alloy, CuTi alloy, and CuNiSi alloy for use in the present invention are as shown below:

### [Table 1]

**Table 1**

| Copper Alloy Species | Essential Additive Element (% by weight) | Optional Additive Element (% by weight) | Balance |
|---|---|---|---|
| CuBe Alloy | Be:0.2 to 2.0% | Ni+Co:0.20 to 2.50% | Cu and Inevitable Impurities |
| CuNiSn Alloy | Ni:8.5 to 22.0%, Sn:4.5 to 8.5% | - | Cu and Inevitable Impurities |
| CuTi Alloy | Ti:2.8 to 3.5% | - | Cu and Inevitable Impurities |
| CuNiSi Alloy | Ni:2.2 to 4.2%, Si:0.25 to 1.2% | - | Cu and Inevitable Impurities |

The copper alloy constituting the designed article of the present invention preferably has a Rockwell hardness of HRC 16 to 45, more preferably HRC 20 to 45, and still more preferably HRC 25 to 45, as measured according to JIS Z 2245:2016. The hardness in these ranges can effectively prevent deformation or breakage of the designed article upon dropping or hitting, while allowing the copper alloy to be mechanically machined.

### Method

The article superior in design of the present invention can be produced by molding and/or processing a copper alloy into a designed article, and subjecting a surface of the designed article to an etching treatment to allow a crystalline structure of the copper alloy to become visibly recognizable. As described above, this can produce an article that is made of a hard metal, yet is superior in design on the surface, particularly a metal article that allows aging (change over time) of the color tone to be enjoyed. Therefore, since preferred embodiments of the copper alloy and the designed article are as described above, the description thereof is omitted here.

The molding and/or processing of the copper alloy is preferably performed using a technique not involving plastic deformation. Preferred examples of the technique not involving plastic deformation include a casting method and machining. A casting method is preferred. In general, in the process of shaping an article using a copper alloy, plastic deformation is applied by means of plastic processing, such as rolling, extrusion, drawing, or forging, for the purpose of molding into a target article and improving strength. However, in the copper alloy article that has undergone the plastic deformation, a crystalline structure with a size that can be visibly observed may not be obtained. In contrast, performing the molding and/or processing of the copper alloy using a technique not involving plastic deformation ensures that a crystalline structure with a size that can be visibly observed is obtained.

The copper alloy to be subjected to the etching treatment preferably has undergone a homogenization treatment and/or a solution treatment, and a subsequent aging treatment. In other words, the designed article obtained by the molding and/or processing is preferably subjected to a homogenization treatment and/or a solution treatment, and a subsequent aging treatment, prior to the etching treatment. The etching treatment is preferably performed using an oxidizing agent. After the etching treatment, it is preferred to further perform subjecting the article in which the crystalline structure has become visibly recognizable to a heat treatment in an air atmosphere to provide the surface of the article with an aging impression (impression of change over time).

Therefore, the following describes an embodiment of a preferred method for producing an article superior in design, in which (1) melting and casting, (2) homogenization and solution treatments, (3) an aging treatment, (4) finish processing, (5) an etching treatment, and (6) heating in air are performed. While the conditions described below are set for a CuBe alloy, they are almost equally applicable to other precipitation-strengthening or age-hardenable copper alloys (such as a CuNiSn alloy, a CuTi alloy, and a CuNiSi alloy). Of course, it is to be understood that more suitable conditions may be set appropriately according to the alloy species to be employed.

### (1) Melting and Casting

The copper alloy is melted, and cast into a mold to be molded into a desired designed article, such as a wristwatch case. While the mold used for molding is not limited, it is preferably a sand mold. While the melting temperature of the copper alloy may be determined appropriately according to the melting point of the copper alloy used, it is typically 1000 to 1400°C, and more typically 1100 to 1400°C. As described above, this casting method is a technique not involving plastic deformation, and thus, is advantageous in ensuring that a crystalline structure with a size that can be visibly observed is obtained.

### (2) Homogenization and Solution Treatments

The resulting cast product is preferably subjected to homogenization and solution treatments. This can equalize component inhomogeneity during casting, and allows the additive elements to sufficiently dissolve into a solid solution. The homogenization and solution treatments may be performed by holding the cast product for a predetermined time at a temperature immediately below the melting point, followed by quenching. While the holding temperature at this time may be determined appropriately according to the melting point of the copper alloy used, it is typically 800 to 1000°C, and more typically 850 to 950°C. The holding time at the above-mentioned temperature is preferably 5 minutes to 6 hours, and more preferably 30 minutes to 2 hours.

### (3) Aging Treatment

The cast product that has been subjected to the homogenization and solution treatments is preferably subjected to an aging treatment. With a precipitation-strengthening copper alloy or an age-hardenable copper alloy, the hardness and strength can be sufficiently increased by the aging treatment. The aging treatment may be performed by allowing a precipitate to form by holding the cast product for a predetermined time at a predetermined aging-treatment temperature. While the aging-treatment temperature may be determined appropriately according to the properties of the copper alloy used, it is typically 250 to 550°C, and more typically 300 to 500°C. The holding time at the above-mentioned temperature is preferably 30 minutes to 6 hours, and more preferably 1 to 3 hours.

### (4) Finish Processing

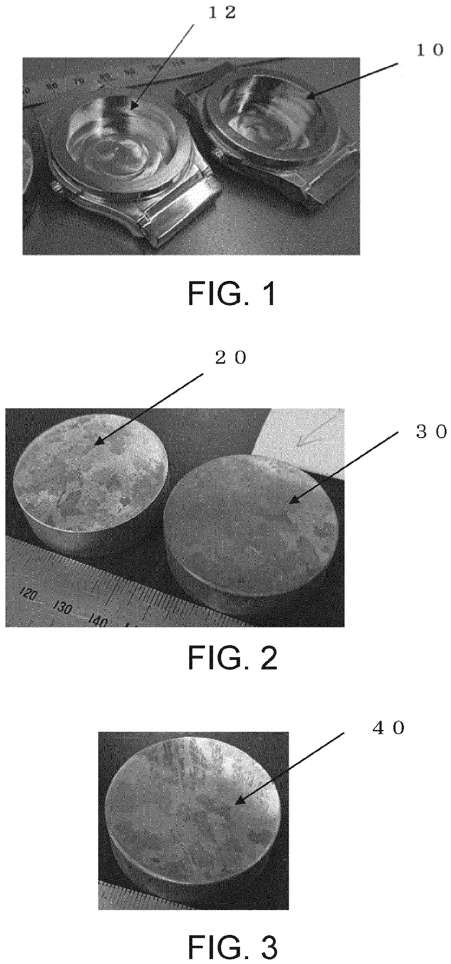

The cast product may be subjected to finish processing like grinding, as necessary. This allows the cast product to be shaped into a designed article with higher precision. The finish processing is an optional step, and is unnecessary if a cast product is obtained with sufficient precision by molding at the time of casting. Figure 1 shows a photograph of a wristwatch case 10 made of a CuBe alloy after finish processing and a wristwatch case 12 made of a CuNiSn alloy after finish processing.

### (5) Etching Treatment

A surface of the designed article is subjected to an etching treatment (corrosion treatment). This treatment exposes the crystalline structure of the copper alloy constituting the designed article, consequently allowing the crystalline structure to become visibly recognizable. The etching treatment is preferably performed by contacting a surface of the designed article with an oxidizing agent to oxidize the surface. Examples of preferred oxidizing agents include nitric acid, sulfuric acid, hydrogen peroxide, and iron chloride. Fig. 2 shows a photograph of the surface of a CuBe alloy 20 after the etching treatment.

### (6) Heating in Air

The designed article after the etching treatment may be subjected to a heat treatment in an air atmosphere to provide the surface of the article with an aging impression (impression of change over time), as necessary. In other words, because the crystalline structure has become visibly recognizable in the designed article after the etching treatment, the user can enjoy changes in the color of the crystalline structure, i.e., an aging impression (impression of change over time) as the user uses the designed article for long years. However, subjecting the article to the heat treatment in air in advance allows the aging impression (impression of change over time) to become noticeable as if the article had already been used over many years, consequently allowing the designed article to have an increased appeal to consumers or users with a preference for antique. While the heat-treatment temperature in an air atmosphere may be determined appropriately according to the properties of the copper alloy used, it is typically 100 to 250°C, and more typically 150 to 200°C. The holding time at the above-mentioned temperature is preferably 30 minutes to 24 hours, and more preferably 1 to 4 hours. Figure 2 shows a photograph of the surface of a CuBe alloy 30 after heating the CuBe alloy 20 at 150°C for 2 hours in air, while Figure 3 shows a photograph of the surface of a CuBe alloy 40 after heating the CuBe alloy 20 at 200°C for 4 hours in air.

### (7) Modifications

An alternative method may include obtaining a round bar-shaped ingot by melting and casting (step (1)); performing the homogenization and solution treatments (step (2)) and the aging treatment (step (3)); and then shaping the ingot into a desired shape, such as a wristwatch case, by means of machining as the finish processing (step (4)). Also in this case, an effect similar to that of the method that performs the steps (1) to (6) described above can be achieved, if the etching treatment (step (5)) and the heating in air (step (6)) are further performed. It should be noted that machining is a technique not involving plastic deformation.

### (8) Conclusion

According to the method described in (1) to (7) above, a metal material having high hardness and being superior in design on the surface can be obtained, and the metal material can be preferably applied to a case and a dial of a wristwatch, a cap and a barrel of a fountain pen, an eyeglass frame, dishware (such as a cup and a glass), and the like.

### EXAMPLES

The present invention will be described more specifically by way of the following Examples.

### Examples 1 to 5

Wristwatch cases were produced according to the following procedure and then evaluated.

### (1) Production of Wristwatch Cases

Precipitation-strengthening copper alloys of the types and compositions shown in Table 2 were prepared. Each of the copper alloys was melted at 1200 to 1400°C, and cast into a sand mold to be molded into a wristwatch case (melting and casting). The resulting cast product was held for 1 hour at a temperature immediately below the melting point of the copper alloy, and then quenched (homogenization and solution treatments). The cast product thus subjected to the homogenization and solution treatments was held at 300 to 500°C for 2 hours to allow a precipitate to form (aging treatment). The cast product thus subjected to the aging treatment was subjected to grinding to be shaped into a wristwatch case of the shape shown in Figure 1 (finish processing). Figure 1 shows a wristwatch case 10 (Example 1) made of a CuBe alloy after finish processing and a wristwatch case 12 (Example 2) made of a CuNiSn alloy after finish processing. Concentrated nitric acid (concentration: 60%) was poured over the surface of the resulting article to expose the crystalline structure (etching treatment). The article thus subjected to the etching treatment was held at 200°C for 24 hours in air to cause the color to change to a brown to green-blue color, thus achieving a noticeable aging impression (impression of change over time) (heating in air). The wristwatch case composed of a copper alloy as shown in Table 2 was thus obtained.

### (2) Evaluation

The following evaluations were made on the obtained wristwatch cases.

### <Rockwell Hardness>

Rockwell hardnesses (HRC) of the copper alloys constituting the wristwatch cases were measured according to JIS Z 2245:2016. The results were as shown in Table 2.

### <Observation of Crystalline Structure>

The surface of each wristwatch case was visually observed to check whether the crystalline structure of the copper alloy has become visibly recognizable. The results were as shown in Table 2.

### Example 6 (Comparative Example)

A wristwatch case was produced and evaluated as in Example 1, except that the copper alloy was subjected to plastic processing, such as rolling, extrusion, drawing or forging to give a plastic processed product, instead of melting the copper alloy and casting it into a sand mold. The results were as shown in Table 2.

### Example 7 (Comparative Example)

A wristwatch case was produced and evaluated as in Example 6, except that the CuBe alloy was replaced by aluminum bronze of the composition shown in Table 2. In the measurement of the Rockwell hardness, because the aluminum bronze was too soft to measure with an HRC, the measurement was performed with an HRB for soft materials, and then the measured value was converted to an HRC value. The results were as shown in Table 2.

### Example 8 (Comparative Example)

A wristwatch case was produced and evaluated as in Example 1, except that the CuBe alloy was replaced by aluminum bronze of the composition shown in Table 2. In the measurement of the Rockwell hardness, because the aluminum bronze was too soft to measure with an HRC, the measurement was performed with an HRB for soft materials, and then the measured value was converted to an HRC value. The results were as shown in Table 2.

### [Table 2]

**Table 2**

| | Copper Alloy | | Method | Rockwell Hardness | Crystalline Structure |
|---|---|---|---|---|---|
| | Alloy Species | Composition (% by weight) | Plastic Processing | | |
| Ex. 1 | CuBe (Precipitation-Strengthening) | Be:1.8%, Co:0.25%, Balance: Cu and Inevitable Impurities | Absent | HRC31 | Visible |
| Ex. 2 | CuNiSn (Precipitation-Strengthening) | Ni:9%, Sn:6%, Balance: Cu and Inevitable Impurities | | HRC26 | |
| Ex. 3 | CuTi (Precipitation-Strengthening) | Ti:3%, Balance: Cu and Inevitable Impurities | | HRC26 | |
| Ex. 4 | CuBe (Precipitation-Strengthening) | Be:0.4%, Ni:2.0% Balance: Cu and Inevitable Impurities | | HRC23 | |
| Ex. 5 | CuNiSi (Precipitation-Strengthening) | Ni:3%, Si:0.65%, Balance: Cu and Inevitable Impurities | | HRC20 | |
| Ex. 6^{★} | CuBe (Precipitation-Strengthening) | Be:1.8%, Co:0.25%, Balance: Cu and Inevitable Impurities | Present | HRC40 | Invisible |
| Ex. 7^{★} | Aluminum Bronze | Al:9%, Ni:2%, Fe:3%, Balance: Cu and Inevitable Impurities | | HRB95 (HRC15*) | |
| Ex. 8^{★} | Aluminum Bronze | Al:9%, Ni:2%, Fe:3%, Balance: Cu and Inevitable Impurities | Absent | HRB90 (HRC9*) | Visible |

| | | | | | |
|---|---|---|---|---|---|
| ^{★} denotes Comparative Example. * The HRC value in parentheses was converted from an HRB value. | | | | | |

## Claims

1. A method for producing an article superior in design, comprising molding and/or processing a copper alloy into a designed article, and subjecting a surface of the article to an etching treatment to allow a crystalline structure of the copper alloy to become visibly recognizable.

2. The method according to claim 1, wherein the designed article is selected from the group consisting of a case and a dial of a wristwatch, a cap and a barrel of a fountain pen, an eyeglass frame, and dishware.

3. The method according to claim 1 or 2, further comprising subjecting the article in which the crystalline structure has become visibly recognizable to a heat treatment in an air atmosphere to provide the surface of the article with an aging impression.

4. The method according to any one of claims 1 to 3, wherein the copper alloy is a precipitation-strengthening copper alloy or an age-hardenable copper alloy.

5. The method according to claim 4, wherein the precipitation-strengthening copper alloy or the age-hardenable copper alloy is at least one selected from the group consisting of a CuBe alloy, a CuNiSn alloy, a CuTi alloy, and a CuNiSi alloy.

6. The method according to any one of claims 1 to 5, wherein the molding and/or processing is performed using a technique not involving plastic deformation.

7. The method according to any one of claims 1 to 6, wherein the etching treatment is performed using an oxidizing agent.

8. The method according to any one of claims 1 to 7, wherein the copper alloy to be subjected to the etching treatment has undergone a homogenization treatment and/or a solution treatment, and a subsequent aging treatment.

9. An article superior in design, which is composed of a copper alloy and in which a crystalline structure of the copper alloy has become visibly recognizable.

10. The article superior in design according to claim 9, wherein the article is selected from the group consisting of a case and a dial of a wristwatch, a cap and a barrel of a fountain pen, an eyeglass frame, and dishware.

11. The article superior in design according to claim 9 or 10, wherein the article is produced using the method according to any one of claims 1 to 8.
